Europäisches Patentamt

European Patent Office

Office européen des brevets

(11) Publication number: **0 407 365 A1**

# (12) EUROPEAN PATENT APPLICATION

(21) Application number: 90830306.8

(22) Date of filing: 04.07.90

(51) Int. Cl.⁵: **A47J 31/40**

(30) Priority: 07.07.89 IT 947389

(43) Date of publication of application:
09.01.91 Bulletin 91/02

(84) Designated Contracting States:
**AT BE CH DE ES FR GB LI NL SE**

(71) Applicant: **Vallecchi, Marcello**
**Via L. Spallanzani 5**
**Firenze(IT)**

Applicant: **Vallecchi, Monica**
**Via L. Spallanzani 5**
**Firenze(IT)**

Applicant: **Liberati, Corrado**
**Via Maso Finiguerra 7**
Firenze(IT)

(72) Inventor: **Vallecchi, Marcello**
**Via L. Spallanzani 5**
**Firenze(IT)**
Inventor: **Vallecchi, Monica**
**Via L. Spallanzani 5**
**Firenze(IT)**
Inventor: **Liberati, Corrado**
**Via Maso Finiguerra 7**
**Firenze(IT)**

(74) Representative: **Mannucci, Gianfranco,**
**Dott.-Ing.**
**Ufficio Tecnico Ing. A. Mannucci Via della**
**Scala 4**
**I-50123 Firenze(IT)**

(54) **Electromechanical device for automatically making single doses of espresso coffee.**

(57) An oscillating element (14) with a containing cylinder (16), an ejector piston with filter (18) with a maneuvering shank (22) for its sliding in the cylinder and a lateral delivery spout (20) assumes a first position under a loading hopper (7) associated with the dosing apparatus, a second position aligned with a sliding element (24) with a filtering ram (26) capable of penetrating into the containing cylinder (16) in order to press a load (C) received from said hopper (7), and a third very inclined position for the ejection of the load of used powder; the whole with a multiple-cam mechanism and with a shaft which carries out a revolution.

Fig. 2

The invention relates to a device for making infusions of espresso coffee in an automatic manner with the aid of a fall-type dosing apparatus, which is simple, compact and reliable. Essentially, said device comprises a combination of:

- an oscillating element with a containing cylinder, an ejector piston with filter with a maneuvering shank for its sliding in the cylinder and a lateral delivery spout;
- a loading hopper associated with the dosing apparatus, and with which the containing cylinder aligns itself in its first angular loading position;
- a sliding element with a filtering ram capable of penetrating into the containing cylinder when the latter is in its second angular pressing position which is aligned with the direction of sliding of said sliding element, in order to press a load received from said hopper;
- associated with said filtering ram, a supply pipe for dosed hot water which is forced into the containing cylinder in order to percolate under pressure through the load received from said hopper and pressed between said ejector piston with filter and said filtering ram to form the infusion which flows from said spout;
- a maneuvering mechanism with a rotating shaft with multiple cam means to act on the oscillating element and to make the latter achieve said first and second positions of loading and of pressing and a third very inclined position for discharge of the used powder, and with cam means to control said sliding element of the filtering ram;
- and a mechanism maneuvered with the inclination of said oscillating element in order to make the ejector piston with filter slide into an ejection position on reaching said third very inclined position of said oscillating element.

In practice, the maneuvering mechanism consists of multiple cams, a lever with contours which interact with said multiple cams and a connecting-rod arrangement which is capable of acting on the element of the containing cylinder in order to make the latter achieve in sequence the three functional positions.

On the same operating shaft of the multiple cams, a pressing cam can also be provided, which acts on the sliding element.

In a possible embodiment, the mechanism for control of the ejector piston with filter consists of a rod moved by the oscillating element along a slot of the housing, which is in part curved and concentric with the axis of oscillation of said element in order to exclude relative movements, and in part active in order to move said rod which acts on the shank of the piston.

The invention will be better understood following the description and the attached drawing which shows a practical non-limitative illustrative embodiment of said invention. In the drawing

Fig. 1 shows a front view;
Fig. 2 shows a lateral view along the line II-II in Fig. 1, in a position for loading of the powder;
Fig. 3 shows a cross-section according to III-III in Fig. 1, in the same position;
Fig. 4 shows a view and partial cross-section similar to those in Figs 2 and 3, in a position for pressing the load of powder and for making the infusion; and
Fig. 5 shows a view similar to that in Fig. 2, in a position for ejecting and discharging the used powder.

According to what is illustrated in the attached drawing, 1 indicates a main housing, to which is attached laterally a geared motor 3, the shaft 5 of which bears a number of cams for maneuvers of movable members. 7 indicates a lateral inclined hopper which is capable of receiving by falling or other means single loads of powder intended to be introduced into the device for the making of single doses of infusion of coffee or the like. 9 indicates a terminal of a pipe 10 for delivery of hot water in dosed quantities, said terminal comprising a delivery valve (not shown) which has to be opened opportunely and temporarily in order to deliver single doses of hot water.

Inside the housing 1, on a shaft 12, an oscillating element 14 is mounted, which forms a containing cylinder 16 and in which a piston 18 can slide, which is an ejector piston with filter in that it comprises a filtering wall capable of holding back the powder, which can be inserted and pressed into the containing cylinder 16 and against the piston 18, while allowing the passage of the infusion made; a lateral spout 20 extends from the lower part of the cavity of the containing cylinder 16 for the delivery of the infusion. The ejector piston with filter 18 is integral with a maneuvering shank 22 which towards the end forms a pair of shoulders 22A for the maneuvering of the same shank in the manner indicated below.

In the housing 1, a sliding element 24 is also arranged, which has a filtering ram 26 capable of penetrating into the cavity 16 of the containing cylinder in one angular position of the latter; said element 24, 26 is expediently guided for sliding in a vertical direction in the housing 1, and also in particular with the aid of slots 28 in the housing and of guide pegs or other suitable means; from said sliding element there projects a bracket 30 with a pipe 32 for the supply of water, which is capable of penetrating into the connection terminal 9 upon the lowering of the sliding element 24, 26 and when the ram 26 of this element in turn penetrates into the containing cylinder 16 for the purposes indicated below.

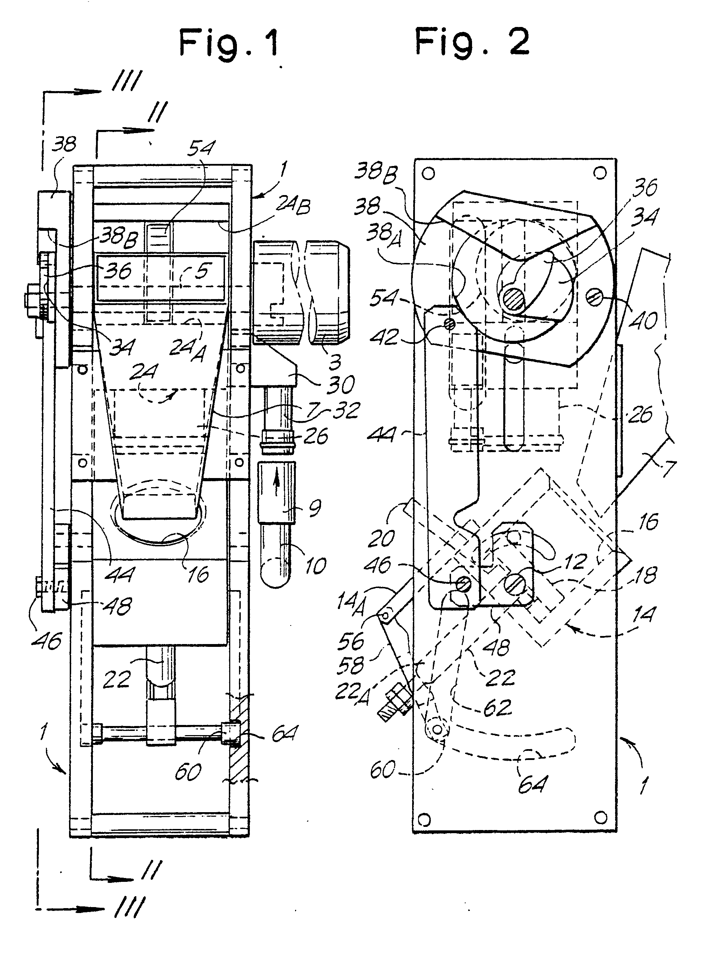

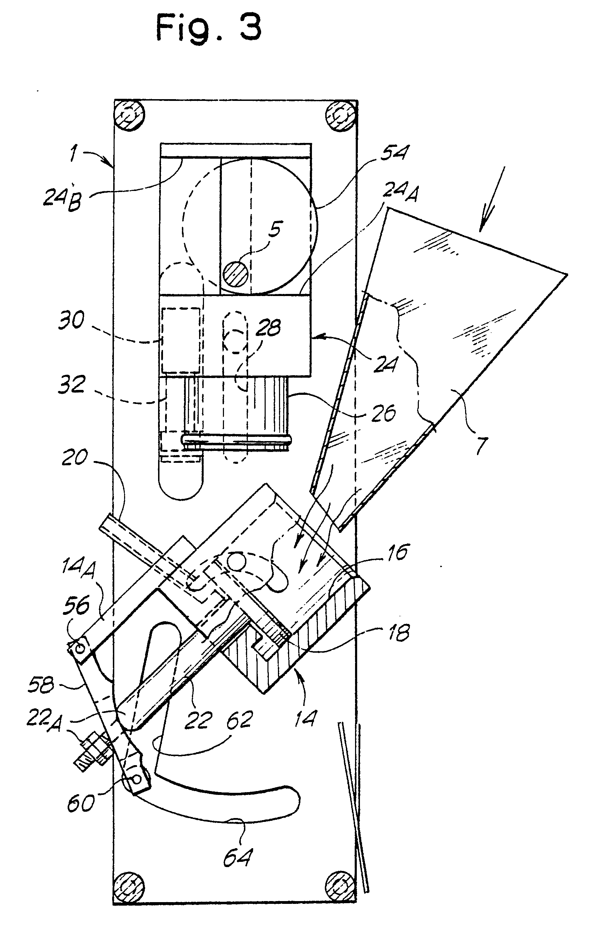

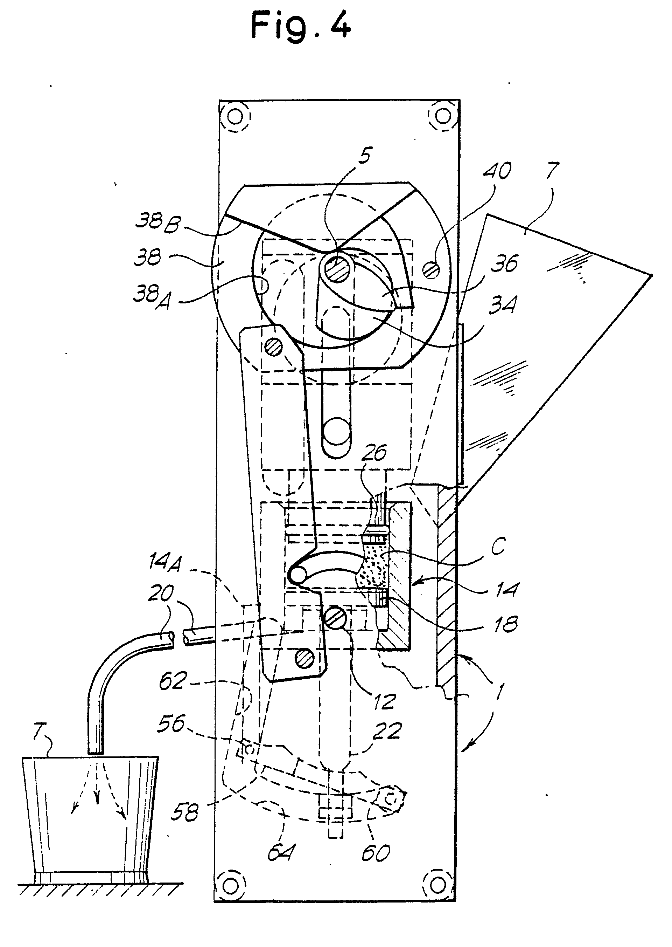

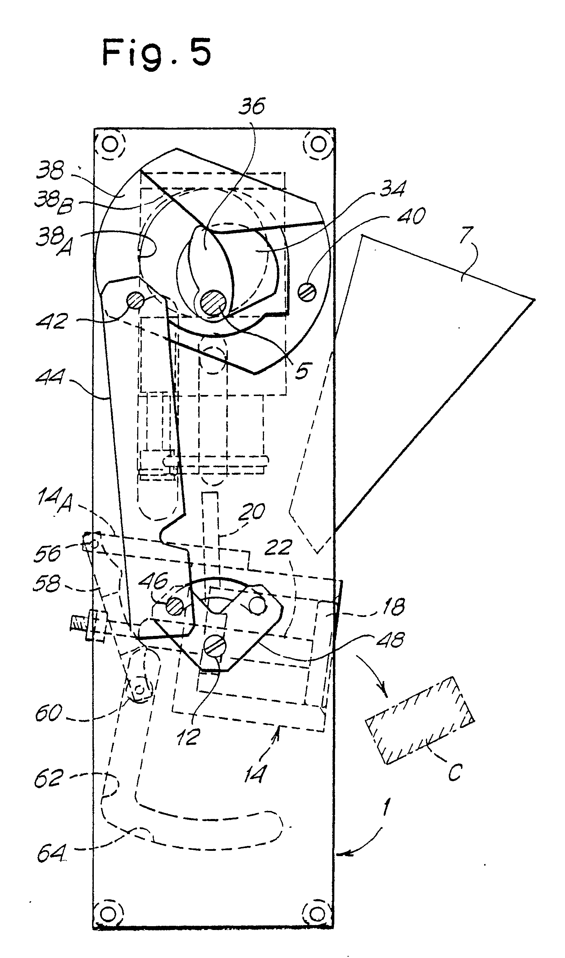

A maneuvering mechanism is provided which is associated with the shaft 5 with multiple cams in order to control the oscillation movements of the oscillating element 14, the vertical sliding movements of the sliding element 24 and indirectly the sliding movements of the ejector piston with filter 18. At the end of the shaft 5 outside the housing 1, a multiple cam 34, 36 is provided, which can act on an annular lever member 38 which is articulated at 40 on the housing. Upon rotation in a clockwise direction (looking at Fig. 2) of the shaft 5 and thus of the multiple cam 34, 36, an angular movement of the annular lever member 38 can be brought about for the maneuvering of the oscillating element 14; to this end, said member 38 engages by means of a pin 42 a rod 44 which forms part of the maneuvering mechanism of the oscillating element 14 and which is articulated at 46 on an oscillating right-angled lever 48, which is articulated on the oscillation pin 12 of the oscillating element 14, and which engages said element with a lever arm formed by the right-angled lever 48; moreover, this lever 48 can act directly on the element 14 by means of the pin 12. This mechanism 38, 44, 48 - maneuvered by the multiple cam 34, 36 - brings about the movements of the oscillating element in order to achieve a first slightly inclined position so as to make the containing cylinder 16 correspond to the hopper 7 (Fig. 2 and Fig. 3), to move said element 14 with the containing cylinder 16 into the second vertical position in Fig. 4 in order to align it with the filtering ram 26, and to move it into a third more inclined position as shows in Fig. 5 for the ejection. For these purposes, the two cams 34, 36 are provided, which act in a cavity 38A of the annular lever member 38 and on a projection 38B inside said cavity, as can be seen in particular in Fig. 2. An internal cam 54, also mounted on the shaft 5, is a pressing cam which acts on the sliding element 24 and in particular on surfaces 24A and 24B of the latter in order to bring about the pressing by means of a lowering travel of the ram 26 into the cavity of the containing cylinder 16 and to bring about its subsequent raising.

The mechanisms leading to the cams of the shaft 5 serve to bring about the various stages of movement of the oscillating element 14. For functionality, the element 14 has to assume a partially inclined position with the containing cylinder 16 in the area of the hopper 7 in order to receive the dosed load of powder, the ejector piston with filter 18 being lowered as shown in Fig. 3. Subsequently, by means of the mechanism, the vertical position of the element 14 (see Fig. 4) is brought about, at which time the sliding element 24 is lowered in such a manner that the ram 26 enters the containing cylinder 16 and is lowered until it presses the load of powder against the piston 18; simultaneously with the lowering of the element 24, the connection of the pipe 32 is introduced into the terminal 9 of the water supply pipe 10 and a valve is opened opportunely, either by the same member 32 or by a separate synchronized control, which causes the supply of water under pressure through the pipe 32 and the filtering ram 26. The water passes through the pressed load of powder and passes through the ejector piston with filter 18, as a result of which the infusion thus formed, from the bottom of the containing cylinder 16, is discharged through the spout 20 into a cup T or other suitable means. In a subsequent stage, the sliding element has to be made to rise again in order to extract the ram 26 from the containing cylinder 16, after which the element 14 is inclined again and to a greater extent until it is in the third position in Fig. 5, in which the containing cylinder 16 is inclined towards the outside and downwards in order to cause the discharge of the pastille of used powder from the containing cylinder 16. To this end, a travel of the piston 18 is envisaged to reach the edge of the cavity of the cylinder 16, and this is obtained in the manner indicated below. Subsequently the element 14 is again brought back into the first position initially described in Figs 2 and 3 in order to be ready to receive the new load of coffee powder. the piston 18 having again gone back into the previously indicated conditions of maximum lowering inside the containing cylinder 16.

In order to bring about the movement of the piston 18 in the containing cylinder 16 for the ejection. the same movement of the element 14 from the first partially inclined position in Figs 2 and 3 to the third more inclined position for discharging shows in Fig. 5 is utilized. The element 14 has an extension 14A, on which at 56 a shank 58 is articulated. which has at the opposite end a small wheel or small roller 60 or other sliding means in order to move in a shaped slot formed in the side of the housing 1; said slot comprises a rectilinear section 62 and a curved section 64 which is concentric with the axis of articulation 12. The shank 58, in an intermediate position and with a certain play, is engaged between the two shoulders 22A of the shank 22 of the piston 18. The arrangement is such that when the element 14 of the containing cylinder 16 moves between the first position in Figs 2 and 3 and the second position in Fig. 4 in one direction and the other, the small roller 60 runs in the curved section 64 of the slot 62, 64 and reciprocal movements of the shank 58 and of the shank 22 of the piston 18 are not brought about, as a result of which this piston 18 remains in the lowered position to receive the powder (Figs 2 and 3) and for the pressing and the percolation of the liquid in the attitude in Fig. 4. When, from the attitude in Fig. 4, through the attitude in Figs 2 and 3, the element 14 is made to slide more extensively in order to be inclined into the attitude for discharge in Fig. 5, the small roller 60 comes to run through the slightly inclined rectilinear section 62 and a movement of the shank 58 is brought about, which is still drawn by the articulation 56 which is integral with the rigid extension 14A of the element 14; with this excursion along the section 62 of the slot 62, 64, the mechanism represented by the slot 62, 64, by the shank 58, by the small roller 60 and by the articulation 56 causes the sliding of the ejector piston with filter 18 from the position in the bottom of the containing cylinder 16 until it reaches and even passes the edge of the opening of the cylinder 16 and thus brings about the ejection of the pastille of used powder which detaches itself from the piston 18 and falls into a suitable collection system. Upon the opposite travel, from the third inclined position in Fig. 5 to the first position in Figs 2 and 3 in alignment with the hopper 7, the piston 18 returns into the bottom of the containing cylinder 16 through the effect of the travel of the small roller 60 along the section 62 of the slot or groove 62, 64.

It is thus possible to obtain with a mechanism such as that described all the stages for the making of a dose of infusion of coffee, by means of a simple rotation of the cam shaft 5.

**Claims**

1. A device for making infusions of espresso coffee in an automatic manner with the aid of a fall-type dosing apparatus, which comprises a combination of: an oscillating element (14) with a containing cylinder (16), an ejector piston with filter (18) with a maneuvering shank (22) for its sliding in the cylinder and a lateral delivery spout (20); a loading hopper (7) associated with the dosing apparatus, and with which the containing cylinder (16) aligns itself in its first angular loading position; a sliding element (24) with a filtering ram (26) capable of penetrating into the containing cylinder (16) when the latter is in its second angular pressing position which is aligned with the direction of sliding of said sliding element (24), in order to press a load (C) received from said hopper (7); associated with said filtering ram (26), a supply pipe (32) for dosed hot water which is forced into the containing cylinder (16) in order to percolate under pressure through the load received from said hopper (7) and pressed between said ejector piston with filter (18) and said filtering ram (26) to form the infusion which flows from said spout (20); a maneuvering mechanism with a rotating shaft (5) with multiple cam means (34, 36) to act on the oscillating element (14) and to make the latter achieve said first and second positions of loading and of pressing and a third very inclined position for discharge of the used powder, and with cam means (54) to control said sliding element (24) of the filtering ram (26); and a mechanism (14A, 56, 58, 60, 62, 64) maneuvered with the inclination of said oscillating element (14) in order to make the ejector piston with filter (18) slide into an ejection position on reaching said third very inclined position of said oscillating element (14).

2. The device as claimed in claim 1, wherein the maneuvering mechanism consists of multiple cams (34, 36), a lever (38) with contours which interact with said multiple cams (34, 36) and a connecting-rod arrangement (44, 48) which is capable of acting on the element (14) of the containing cylinder (16) in order to make the latter achieve in sequence the three functional positions.

3. The device as claimed in preceding claims, wherein, on the same operating shaft (5) of the multiple cams (34, 36), a pressing cam (54) is provided, which acts on the sliding element (24, 26).

4. The device as claimed in preceding claims, wherein the mechanism for control of the ejector piston with filter (18) consists of a rod (58) moved by the oscillating element (14) along a slot (62, 64) of the housing (1), which is in part (64) curved and concentric with the axis of oscillation (12) of said element (14) in order to exclude relative movements, and in part (62) active in order to move said rod (58) which acts on the shank (22) of the piston (18).

# Fig. 1

# Fig. 2

# Fig. 3

# Fig. 4

# Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3316159 (WURTEMBERGISCHE METALLWARENFABRIK)<br>* page 9, line 18 - page 14, line 27; figures * | 1, 3 | A47J31/40 |
| A | | 2, 4 | |
| Y | EP-A-0295565 (WMF WURTEMBERGISCHE METALLWARENFABRIK AG)<br>* column 7, line 25 - column 9, line 7; figures 1, 2 * | 1, 2 | |
| A | | 4 | |
| Y | FR-A-2424010 (WITTENBORG)<br>* page 4, line 1 - page 6, line 17; figures * | 1, 2 | |
| A | | 4 | |
| A | EP-A-0154206 (GESAMAT AG)<br>* page 8, line 11 - page 9, line 11; figures 1, 4 * | 1 | |

| | | | TECHNICAL FIELDS SEARCHED (Int. Cl.5 ) |
|---|---|---|---|
| | | | A47J |

The present search report has been drawn up for all claims

| Place of search | Date of completion of the search | Examiner |
|---|---|---|
| THE HAGUE | 05 OCTOBER 1990 | BODART P. |